# EUROPÄISCHE PATENTSCHRIFT

(11) **EP 2 494 225 B1**
(45) Veröffentlichungstag und Bekanntmachung des Hinweises auf die Patenterteilung: **15.02.2017**
(21) Anmeldenummer: 10786990.1
(22) Anmeldetag: 18.10.2010
(51) Int. Cl.: F16D 13/04, F16D 13/38

(54) **KUPPLUNGSAGGREGAT**
CLUTCH ASSEMBLY
MODULE D'EMBRAYAGE

(30) Priorität: 29.10.2009 DE 102009051243
(43) Veröffentlichungstag der Anmeldung: 05.09.2012
(73) Patentinhaber: Schaeffler Technologies AG & Co. KG, 91074 Herzogenaurach (DE)
(72) Erfinder: SIMON, Yannick, 3853 Münchenbuchsee (CH); RABER, Christoph, 66564 Ottweiler-Steinbach (DE); VOGEL, Florian, 76534 Baden-Baden (DE); CHAMBRION, Martin, 67850 Herrlisheim (FR)
(86) Internationale Anmeldenummer: PCT/DE2010/001225
(87) Internationale Veröffentlichungsnummer: WO 2011/050773

(56) Entgegenhaltungen:
- DE-A1-102007 037 560
- GB-A- 1 251 468
- GB-A- 2 251 465
- JP-A- 2005 344 920
- US-A1- 2005 167 229

## Beschreibung

Die Erfindung betrifft ein Kupplungsaggregat in einem Antriebsstrang eines Kraftfahrzeugs mit einer Brennkraftmaschine mit einer Kurbelwelle und einem Getriebe mit einer Getriebeeingangswelle mit einer ersten Reibungskupplung enthaltend eine erste Gegendruckplatte und eine axial verlagerbar und drehfest an der ersten Gegendruckplatte aufgenommene erste Anpressplatte, die von einer Tellerfeder gegen die erste Gegendruckplatte unter Zwischenlegung von Reibbelägen einer ersten, mit der Getriebeeingangswelle drehfest verbundenen Kupplungsscheibe verspannt wird, und mit einer zweiten Reibungskupplung enthaltend eine zweite Gegendruckplatte und eine axial verlagerbar und drehfest an der zweiten Gegendruckplatte aufgenommene Anpressplatte, die in Richtung der zweiten Gegendruckplatte unter Zwischenlegung von Reibbelägen einer zweiten, mit der Getriebeeingangswelle verbundenen Kupplungsscheibe verspannbar ist.

Gattungsgemäße Kupplungsaggregate sind - wie beispielweise aus der
DE 10 2007 037 560 A1 bekannt - als Mehrscheibenkupplungen ausgebildet, die zwei mit einer Getriebeeingangswelle verbundene Kupplungsscheiben mit axial zueinander beabstandeten Reibbelägen aufweisen, die einerseits zwischen einer zentralen Gegendruckplatte und einem schwimmenden Zwischenflansch und andererseits zwischen dem Zwischenflansch und einer drehfest und axial verlagerbaren gegenüber der Gegendruckplatte angeordneten, von einer Tellerfeder beaufschlagten Anpressplatte zur Bildung eines Reibeingriffs axial verspannt werden. Die durch die Parallelanordnung von zwei oder mehreren Kupplungsscheiben wird durch Erhöhung der Reibbelagsflächen ein höheres übertragbares Moment bei gleichzeitiger Erhöhung der erforderlichen Betätigungskraft und/oder bei Änderung der Hebelverhältnisse der Tellerfeder einer Verlängerung des Betätigungswegs übertragen. Im Weiteren baut eine derartige Mehrscheibenkupplung wegen der axial benachbarten Anordnung der Kupplungsscheiben axial breit.

Ein anderes Kupplungsaggregat ist aus der GB 2 251 465 A bekannt.

Es ergibt sich daher die Aufgabe, ein Kupplungsaggregat mit vergrößerter Kapazität an übertragbarem Moment mit geringer Betätigungskraft vorzuschlagen. In einer vorteilhaften Ausführungsform soll das Kupplungsaggregat ein günstiges Verhältnis zwischen Übertragungskapazität und axialem Bauraum aufweisen.

Die Aufgabe wird durch ein Kupplungsaggregat in einem Antriebsstrang eines Kraftfahrzeugs mit einer Brennkraftmaschine mit einer Kurbelwelle und einem Getriebe mit einer Getriebeeingangswelle mit einer ersten Reibungskupplung enthaltend eine erste Gegendruckplatte und eine axial verlagerbar und drehfest an der ersten Gegendruckplatte aufgenommene erste Anpressplatte, die von einer Tellerfeder gegen die erste Gegendruckplatte unter Zwischenlegung von Reibbelägen einer ersten, mit der Getriebeeingangswelle drehfest verbundenen Kupplungsscheibe verspannt wird, und mit einer zweiten Reibungskupplung enthaltend eine zweite Gegendruckplatte und eine axial verlagerbar und drehfest an der zweiten Gegendruckplatte aufgenommene Anpressplatte, die in Richtung der zweiten Gegendruckplatte unter Zwischenlegung von Reibbelägen einer zweiten, mit der Getriebeeingangswelle verbundenen Kupplungsscheibe verspannbar ist, gelöst, wobei die zweite Gegendruckplatte wirksam mit der Kurbelwelle verbunden, die erste Gegendruckplatte auf der zweiten Gegendruckplatte verdrehbar gelagert und zwischen der ersten Gegendruckplatte und der zweiten Anpressplatte eine axial wirksame Rampeneinrichtung angeordnet ist, wobei die erste Anpressplatte radial innerhalb der zweiten Anpressplatte angeordnet list.

Bei dem Kupplungsaggregat handelt es sich im Wesentlichen um zwei komplette ineinander geschachtelte Reibungskupplungen, wovon eine mittels einer Tellerfeder betätigt wird und abhängig von deren Betriebszustand die andere selbstverstärkend durch die Energie der Brennkraftmaschine betätigt wird. Das Kupplungsaggregat kann dabei direkt mittels der zweiten Gegendruckplatte oder einem mit diesem verbundenen Gehäuse- oder Antriebsteil wie Flexplate mit der Kurbelwelle verbunden sein oder an einem Sekundärteil eines Zweimassenschwungrads angeordnet sein, dessen Primärteil mit der Kurbelwelle wirksam verbunden ist. Dabei kann das Sekundärteil die zweite Gegendruckplatte bilden. Im Sinne der Erfindung können eine oder beide Gegendruckplatten als Schwungmassen oder Schwungräder ausgebildet sein. Weiterhin können an den Gegendruckplatten ein Gehäuse, Deckel oder dergleichen angeordnet sein, an denen sich gegebenenfalls die Tellerfeder axial abstützen kann.

Gemäß dem erfinderischen Gedanken können die Gegendruckplatten aufeinander mittels eines Radiallagers, beispielsweise mittels eines Rillenkugellagers, das die Gegendruckplatten zugleich axial aufeinander fixiert, oder mittels eines Axiallagers, beispielsweise eines Axialrillenkugellagers, eines Nadellagers oder Schrägwälzlagers, die die erste Gegendruckplatte zugleich auf der zweiten Gegendruckplatte radial zentrieren, gelagert sein.

Das Rampensystem bewirkt bei geschlossener erster Reibungskupplung eine Relativverdrehung der ersten Gegendruckplatte gegenüber der zweiten Anpressplatte, wodurch die in Umfangsrichtung wirksamen Rampen ein axiales Zustellen der zweiten Anpressplatte gegenüber der zweiten Gegendruckplatte und damit die zweite Reibungskupplung mittels des Drehmoments der Brennkraftmaschine erfolgt. Dabei wird die zweite Reibungskupplung bei einem Drehmomentfluss von der Brennkraftmaschine in das Getriebe - also im Zugbetrieb des Antriebsstrangs - von der vom Getriebe an der geschlossenen ersten Reibungskupplung anstehenden Last zur Verlagerung der Anpressplatte mittels einer Relativverdrehung der ersten Gegendruckplatte und der Anpressplatte mittels der Rampeneinrichtung zugedrückt. Um bei einer Drehmomentumkehr bei einem Wechsel in den Schubbetrieb mit von dem Getriebe auf die im Schleppbetrieb betriebene Brennkraftmaschine weiterhin Drehmoment über die zweite Reibungskupplung übertragen zu können, werden an dem Rampensystem über den Umfang verteilte, ausgehend von einer mittleren Position in Umfangsrichtung beidseitig axial ansteigende Rampen vorgesehen, so dass die Anpressplatte nach einem Nulldurchgang während des Lastwechsels infolge der nach wie vor geschlossenen ersten Reibungskupplung von den den im Zugbetrieb wirksamen Rampen in Umfangsrichtung entgegengesetzten Rampen axial beaufschlagt wird.

In vorteilhafter Weise sind die Rampen in der ersten Gegendruckplatte und die in der zweiten Anpressplatte vorgesehenen komplementären Rampen als Kugelrampen ausgebildet, in denen jeweils eine Kugel abwälzt. Der Durchmesser der Kugeln von Kugelrampen ist vorzugsweise größer als der maximale Abstand der Kugelrampen der ersten Gegendruckplatte von den Kugelrampen der zweiten Anpressplatte, so dass die Kugeln verliersicher in den Kugelrampen angeordnet sind. Die über den Umfang verteilten und in den Kugelrampen untergebrachten Kugeln können in einem Kugelkäfig untergebracht sein, so dass eine ungleichmäßige Lage dieser in den sich gegenüberliegenden Kugelrampen vermieden wird. Die Rampen wie Kugelrampen sind in bevorzugter Weise im Bereich des Außenumfangs der ersten Anpressplatte angeordnet.

Um einen Momentenruck zu vermeiden, der während eines Lastwechsels auftreten kann, wenn die zweite Reibungskupplung ein nach dem Nulldurchgang bereits anstehendes Moment, beispielsweise beim Wechsel von Zug auf Schub ein Schubmoment beziehungsweise beim Wechsel von Schub auf Zug ein Zugmoment, überträgt und dann infolge der Klemmung der Rampeneinrichtung erst geöffnet wird, wird vorgeschlagen, die Reibbeläge der beiden Kupplungsscheiben miteinander drehelastisch zu koppeln. Auf diese Weise kann vorgesehen werden, dass ein Reibbelag gegenüber dem anderen in Drehrichtung vorgespannt ist und die Klemmung beseitigt und die zweite Reibungskupplung vorzugsweise im Bereich des Nulldurchgangs geöffnet und ein Momentenruck damit beseitigt oder zumindest auf das in diesem Bereich geringe übertragene Moment beschränkt wird.

Gemäß einem vorteilhaften Ausführungsbeispiel kann hierzu vorgesehen sein, die Kupplungsscheiben mit einer unterschiedlichen Torsionssteifigkeit mit der Getriebeeingangswelle zu verbinden. Dabei wird durch das anliegende Drehmoment eine Kupplungsscheibe in Richtung des Drehmoments stärker zwischen Reibbelägen und der drehfest mit der Getriebeeingangswelle verbundenen Nabe vorgespannt, so dass bei nachlassendem Moment während eines Lastwechsels der Reibeingriff zumindest der zweiten Kupplungsscheibe aufgrund der Vorspannung der beiden Kupplungsscheiben in Drehrichtung bei annähernd vernachlässigbarem zu übertragendem Drehmoment aufgelöst und durch Mitnahme der Anpressplatte in die entgegengesetzte Drehrichtung und axialer Verlagerung durch die entgegengesetzten Rampen erneut ein Reibschluss gebildet und das anstehende Moment übertragen wird.

Die variierende Torsionssteifigkeit kann vorgesehen werden, indem beispielsweise zumindest eine der beiden Kupplungsscheiben zwischen den Reibbelägen und einer mit der Getriebeeingangswelle drehfest verbundenen Nabe einen in Umfangsrichtung wirksamen Energiespeicher oder einen Torsionsschwingungsdämpfer aufweist. Alternativ oder zusätzlich kann zwischen einer Nabe der ersten Kupplungsscheibe und einer Nabe der zweiten Kupplungsscheibe die Getriebeeingangswelle drehelastisch ausgebildet sein. Beispielsweise kann eine der beiden Naben auf einer gegenüber der Getriebeeingangswelle drehelastisch angeordneten Hülse aufgenommen sein oder die Nabenverzahnung gegenüber der Verzahnung der Getriebeeingangswelle drehelastisch ausgebildet sein.

Weiterhin kann die erste Reibungskupplung axial innerhalb eines Bauraums der zweiten Reibungskupplung angeordnet sein.
Die Erfindung wird anhand der in den Figuren 1 bis 7 dargestellten Ausführungsbeispiele näher erläutert. Dabei zeigen:
- Figur 1: eine schematische Darstellung eines Kupplungsaggregats mit zwei Reibungskupplungen,
- Figur 2: eine bezüglich der Lagerung der Reibungskupplungen aufeinander gegenüber dem Kupplungsaggregat der Figur 1 verändertes Kupplungsaggregat,
- -Figur 3: ein konstruktiv ausgestaltetes Ausführungsbeispiel des Kupplungsaggregats der Figur 1 im Schnitt,
- Figur 4: die erste Reibungskupplung des Kupplungsaggregats der Figur 1 im Schnitt,
- Figur 5: eine Detailansicht des Kupplungsaggregats der Figur 3,
- Figur 6: eine Ansicht der ersten Reibungskupplung der Figur 3 bei abgenommener zweiter Reibungskupplung,
- Figur 7: eine Ansicht der zweiten Reibungskupplung der Figur 3 bei abgenommener erster Reibungskupplung und
- Figur 8: ein schematisch dargestelltes Diagramm des an dem Kupplungsaggregat wirksamen Moments während eines Lastwechsels des Antriebsstrangs.

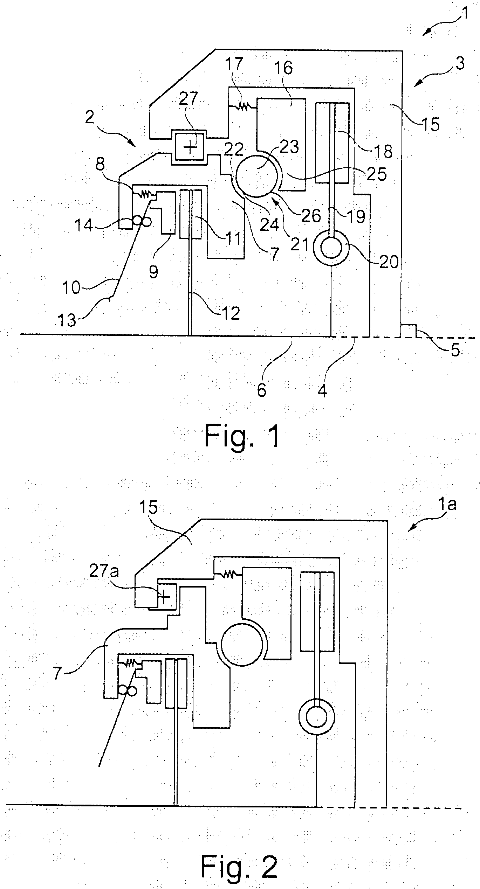

Die Figur 1 zeigt eine schematische Teilschnittdarstellung des Kupplungsaggregats 1 mit den ineinander geschachtelten Reibungskupplungen 2, 3 und die Drehachse 4. Das Kupplungsaggregat 1 verbindet die Kurbelwelle 5 einer nicht dargestellten Brennkraftmaschine mit der Getriebeeingangswelle 6 eines nicht dargestellten Getriebes.

Die erste Reibungskupplung 2 enthält die erste Gegendruckplatte 7, die zugleich als Schwungmasse dienen und weitere Bauteile, beispielsweise ein Gehäuse tragen kann. An dieser ist mittels der Blattfedern 8 die erste Anpressplatte 9 axial verlagerbar und drehfest aufgenommen. Die erste Anpressplatte 9 ist mittels der Tellerfeder 10 gegenüber der ersten Gegendruckplatte 7 unter Zwischenlegung der Reibbeläge 11 der ersten mit der Getriebeeingangswelle 6 drehfest verbundenen Kupplungsscheibe 12 verspannbar, wobei diese an ihren Tellerfederspitzen 13 von einem Betätigungssystem, beispielsweise einer Aktorik mit einem Fußpedal oder einem automatisiert betriebenen Aktor axial beaufschlagt wird und an einem Widerlager 14 der Gegendruckplatte 7 axial abgestützt ist.

Die zweite Reibungskupplung 3 enthält die zweite Gegendruckplatte 15, an der die zweite Anpressplatte 16 mittels der Blattfedern 17 axial verlagerbar und drehfest aufgenommen ist. Erfolgt die Zentrierung der zweiten Anpressplatte 16 auf der zweiten Gegendruckplatte in anderer Weise, können anstatt der Blattfedern 17 gewöhnliche Druck- oder Zugfedern verwendet werden, um die zweite Anpressplatte 16 gegenüber der zweiten Gegendruckplatte 15 axial zu beabstanden. Zwischen der zweiten Gegendruckplatte 15 und der zweiten Anpressplatte 16 sind die Reibbeläge 18 der zweiten Kupplungsscheibe 19, die ebenfalls mit der Getriebeeingangswelle 6 drehfest verbunden ist, angeordnet, die bei einer axialen Verspannung der zweiten Anpressplatte 16 gegenüber der zweiten Gegendruckplatte 15 einen Reibeingriff bilden und Drehmoment von der mit der Kurbelwelle 5 verbundenen zweiten Gegendruckplatte 15 auf die Getriebeeingangswelle 6 übertragen. Im Drehmomentpfad zwischen den Reibbelägen 18 und der Getriebeeingangswelle 6 ist in der zweiten Kupplungsscheibe der Torsionsschwingungsdämpfer 20 in der Kupplungsscheibe 19 angeordnet.

Durch die drehfeste Verbindung beider Kupplungsscheiben 12, 19 der Reibungskupplungen 2, 3 ist das Kupplungsaggregat 1 als Mehrscheibenkupplung ausgebildet, bei der die erste Reibungskupplung 2 von außen gesteuert, beispielsweise von einem mittels eines Pedals oder automatisiert gesteuerten Betätigungssystems betätigt wird und die zweite Reibungskupplung 3 abhängig vom Betriebszustand der ersten Reibungskupplung 2 betätigt wird. Hierdurch treten an dem Betätigungssystem lediglich die Betätigungskräfte zur Betätigung der ersten Reibungskupplung 2 auf, deren Reibfläche kleiner als die Reibfläche der zweiten Reibungskupplung 3 ist, so dass die Betätigungskräfte auf einen Bruchteil, beispielsweise auf die Hälfte bis ein Drittel der Betätigungskräfte für eine vergleichbare, beide Reibungskupplungen betätigendes Betätigungssystems reduziert werden können.

Hierzu sind die Gegendruckplatten 7,15 der beiden Reibungskupplungen 2, 3 aufeinander verdrehbar und axial fest gelagert und die erste Gegendruckplatte 7 der ersten Reibungskupplung 2 mit der zweiten Anpressplatte 16 der zweiten Reibungskupplung 3 mittels einer Rampeneinrichtung 21 mit in Umfangsrichtung angeordneten Rampen 22, 23 miteinander gekoppelt.

In dem gezeigten Ausführungsbeispiel erfolgt die Lagerung der Gegendruckplatten 7, 15 aufeinander mittels eines Radiallagers 27, beispielsweise in Form eines Rillenkugellagers, das entsprechend axial fest in den Gegendruckplatten 7, 15 aufgenommen ist.

Die Rampeneinrichtung 21 ist in dem gezeigten Ausführungsbeispiel aus mehreren in der ersten Gegendruckplatte 7 und in der zweiten Anpressplatte 16 komplementär zu einander und über den Umfang verteilten Rampen 22, 23 wie Kugelrampen 24, 25 mit jeweils einer dazwischen angeordneten Kugel 26 gebildet, so dass die zweite Anpressplatte 16 unter geringern Reibungsaufwand mittels einer Relativverdrehung gegenüber der ersten Gegendruckplatte 7 axial verlagert wird.

Ausgehend von dem in der Figur 1 dargestellten Kupplungsaggregat 1 mit einer aufgedrückten ersten Reibungskupplung 2 - bei einer aufgezogenen Reibungskupplung ändert sich lediglich die Lage des Widerlagers 14 nach radial außen - ergibt sich folgender Funktionszusammenhang:
Bei geöffneten Reibungskupplungen 2, 3 ist die Kurbelwelle 5 von der Getriebeeingangswelle 6 getrennt. Wird die erste Reibungskupplung 2 durch axiale Entspannung der Tellerfederspitzen 13 durch das Betätigungssystem und daraus folgender Verspannung der Reibbeläge 11 mittels der von der Tellerfeder 10 axial verlagerten ersten Anpressplatte 9 gegen die Gegendruckplatte 7 geschlossen, verdreht sich die drehfest mit der zweiten Gegendruckplatte 15, die von der Kurbelwelle 5 der in Betrieb befindlichen Brennkraftmaschine angetrieben wird, verbundene zweite Anpressplatte 16 relativ gegenüber der bei geschlossener erster Reibungskupplung 2 drehfest mit der stehenden oder mit geringerer Drehzahl als die Kurbelwelle 5 drehenden Getriebeeingangswelle 6 verbundenen ersten Gegendruckplatte 7. Damit verlagert sich die zweite Anpressplatte 16 an der Rampeneinrichtung 21 axial gegenüber der axial fest mittels des Radiallagers 27 mit der zweiten Gegendruckplatte 15 verbundenen ersten Gegendruckplatte 7, so dass die Reibbeläge 18 der zweiten Kupplungsscheibe ebenfalls in Reibeingriff mit der Anpressplatte 16 und der Gegendruckplatte 15 treten und damit die zweite Reibungskupplung ebenfalls geschlossen wird. Beide Reibungskupplungen 2, 3 übertragen dabei im Zugbetrieb des Antriebsstrangs Partialmomente von der Kurbelwelle 5 auf die Getriebeeingangswelle 6. Die zweite Reibungskupplung 3 bleibt dabei durch das anstehende Drehmoment von der Kurbelwelle 5 zugedrückt.

Tritt ein Lastwechsel mit einem Richtungswechsel des Drehmoments ein, wird das Drehmoment im Schubbetrieb von der Getriebeeingangswelle 6 auf die Kurbelwelle 5 übertragen, wobei die Brennkraftmaschine dabei im Schleppbetrieb betrieben sein kann. Durch den Richtungswechsel des Drehmoments tritt eine Rückverlagerung der zweiten Anpressplatte 16 gegenüber der ersten Gegendruckplatte 7 ein. Um im Schubbetrieb ebenfalls Drehmoment über die Reibungskupplungen 2, 3 übertragen zu können, weisen die Rampen 22, 23 der Rampeneinrichtung 21 in beide Umfangsrichtungen Steigungen auf, so dass bei einem Richtungswechsel des Drehmoments die zweite Anpressplatte 16 bei einer entsprechenden Relativverdrehung nach einem Nulldurchgang auf die den für den Zugbetrieb vorgesehenen Steigungen in Umfangsrichtung gegenüberliegenden Steigungen ausläuft und die zweite Reibungskupplung 3 auch in diesem Betriebszustand infolge der während der Relativverdrehung durch die Rampeneinrichtung 21 bedinget Axialverlagerung der zweiten Anpressplatte 16 zugedrückt wird.

Figur 2 zeigt im Unterschied zum Kupplungsaggregat 1 der Figur 1 eine schematische Teilschnittdarstellung des Kupplungsaggregats 1a mittels eines Axiallagers 27a der beiden Gegendruckplatten 7, 15 aufeinander. Das Axiallager 27a übernimmt zusätzlich die Zentrierung der ersten Gegendruckplatte 7 auf der zweiten Gegendruckplatte 15 und kann als Axialrillenkugellager, Schrägwälzlager oder als Nadellager ausgebildet sein.

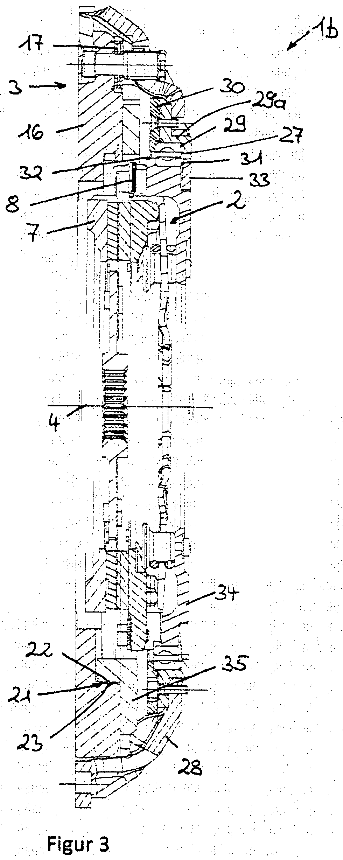

Figur 3 zeigt einen Schnitt durch ein konstruktiv ausgestaltetes Ausführungsbeispiel des Kupplungsaggregats 1 der Figur 1 in Form des um die Drehachse 4 verdrehbaren Kupplungsaggregats 1 b. Dabei ist die zweite Gegendruckplatte 15 (Figur 1), die als Schwungrad oder als Sekundärteil eines Zweimassenschwungrads ausgeführt sein kann, und die zweite Kupplungsscheibe 19 (Figur 1) weggelassen. Mit der ersten Gegendruckplatte wird dabei das Gehäuse 28 verbunden wie verschraubt.

Das Gehäuse 28 nimmt die zweite Anpressplatte 16 der zweiten Reibungskupplung 2 mittels der Blattfedern 17 drehfest und axial verlagerbar sowie das Führungsteil 34 der ersten Gegendruckplatte 7 der ersten Reibungskupplung 2 mittels des Radiallagers 27 verdrehbar und axial fest auf. Dabei ist der Außenring 29 des Radiallagers 27 mittels des am Gehäuse 28 befestigten Lagerhalters 29a am Gehäuse 28 aufgenommen und mittels der Sicherungsscheibe 30 axial gesichert. Der Innenring 31 ist auf dem Außenumfang der ersten Gegendruckplatte 7 an einer radial erhabenen Schulter 32 auf einer Seite und auf der anderen Seite mittels der Sicherungsscheibe 33 axial fixiert

Die erste Reibungskupplung 2 ist radial innerhalb der Anpressplatte 16 der zweiten Reibungskupplung 3 als Modul eingefügt. Zwischen dem Außenumfang der zweiten Anpressplatte 16 und dem Außenumfang des Rampenteils 35 der ersten Gegendruckplatte 7 ist die Rampeneinrichtung mit den Rampen 22, 23 vorgesehen.

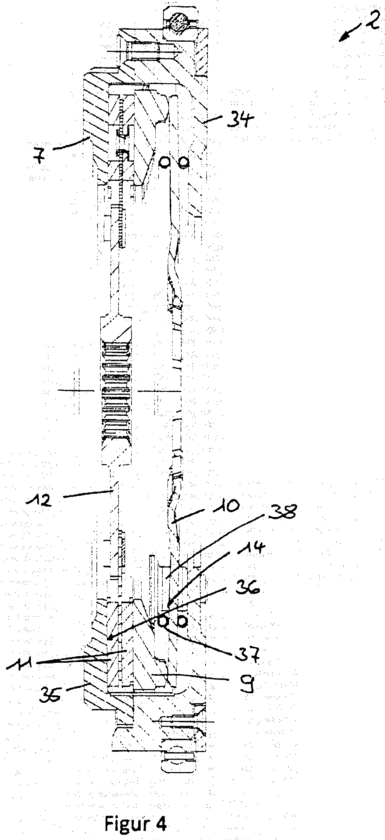

Die detaillierte Beschreibung der ersten Reibungskupplung 2 erfolgt in der Schnittdarstellung dieser in Figur 4. Die erste Gegendruckplatte 7 ist mehrteilig aus dem Führungsteil 34 und dem Rampenteil 35 gebildet, das die Reibfläche 36 zur Bildung des Reibeingriffs mit den Reibbelägen 11 der ersten Kupplungsscheibe 12 aufweist. Die erste Anpressplatte 9 ist mittels der in Figur 3 gezeigten Blattfedern 8 mit dem Führungsteil 34 axial verlagerbar und drehfest verbunden. Die die Anpressplatte 9 beaufschlagende Tellerfeder 10 stützt sich an dem Führungsteil 34 mittels des Widerlagers 14 ab, das durch den Drahtring 37 gebildet wird, der sich wiederum an am Führungsteil 34 befestigten und die Tellerfeder durchgreifenden, über den Umfang verteilten Stufenbolzen 38 abstützt.

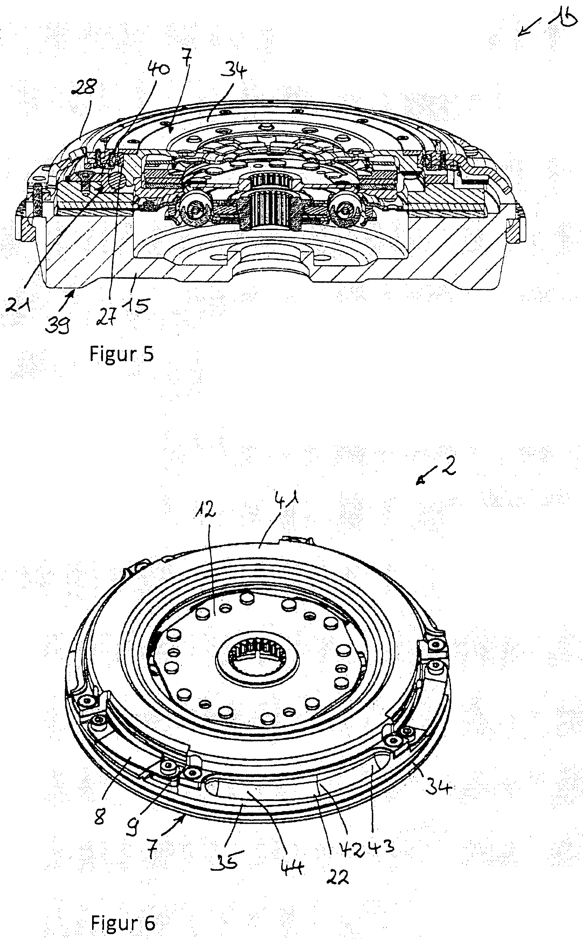

Figur 5 zeigt eine geschnittene Detailansicht des Kupplungsaggregats 1b der Figur 3 bei montiertem, die zweite Gegendruckplatte 15 bildenden Schwungrad 39. Das mit dem Schwungrad 39 verbundene Gehäuse 28 nimmt mittels des Radiallagers 27 das Führungsteil 34 der ersten Gegendruckplatte 7 auf. Im Unterschied zu der Darstellung der ersten Reibungskupplung 2 der Figur 4 ist die Rampeneinrichtung 21 zwischen dem Führungsteil 34 und einem an der zweiten Anpressplatte vorgesehenen Rampenträger 40 ausgebildet und axial beabstandet zu dem Radiallager 27 auf im Wesentlichen gleichem Durchmesser vorgesehen.

Figur 6 zeigt eine Ansicht auf die erste Reibungskupplung 2 der Figur 4 bei abgenommener zweiter Reibungskupplung 3 (Figur 3). Die erste Gegendruckplatte 7 wird in dem gezeigten Ausführungsbeispiel aus dem Rampenteil 35, dem Führungsteil 34 und dem Reibflächenteil 41 gebildet, die miteinander verschraubt sind und ihrer Funktion entsprechend die Reibeingriffsfläche für die zweite Kupplungsscheibe 12 bilden (Reibflächenteil 41), die Rampen 22 ausbilden und die Anbindung der ersten Anpressplatte 9 an die Gegendruckplatte 7 mittels der Blattfedern 8 ausbilden (Rampenteil 35) sowie die Tellerfeder 10 (Figur 4) und das Radiallager 27 (Figur 4) aufnehmen.

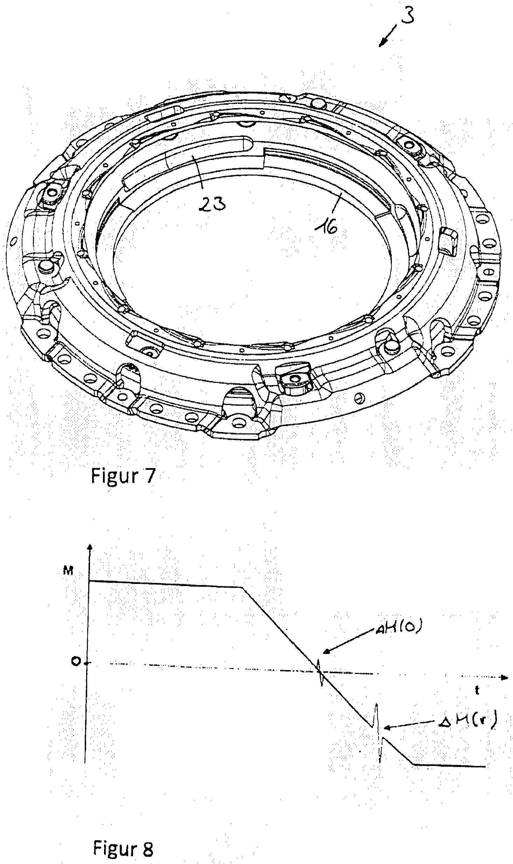

Die Rampen 22 weisen ausgehend von der Nulllage 42 in beide Umfangsrichtungen Steigungen 43, 44 auf, die mit in der Ansicht der zweiten Reibungskupplung 3 der Figur 7 gezeigten komplementären Rampen 23 die Rampeneinrichtung 21 (Figur 3) bilden. Durch die in beide Umfangsrichtungen ausgebildeten Steigungen 43, 44, die alternativ oder zusätzlich auch in den Rampen 23 vorgesehen sein können, wird die zweite Anpressplatte 16 einer Relativverdrehung gegenüber der ersten Gegendruckplatte 7 in beide Umfangsrichtungen axial verlagert und bildet damit einen Reibeingriff mit den Reibbelägen der zweiten Kupplungsscheibe (analog Bezugszeichen 18, 19 der Figur 1). Da die Relativverdrehung abhängig von der Drehmomentrichtung, also abhängig vom Zug- oder Schubbetrieb in die entsprechende Umfangsrichtung erfolgt, wird beziehungsweise bleibt die Reibungskupplung 3 sowohl im Zug- als auch im Schubbetrieb geschlossen, solange die erste Reibungskupplung 2 (Figur 4) geschlossen ist.

Figur 8 zeigt ein schematisch dargestelltes Diagramm des über das Kupplungsaggregat 1 der Figur 1 unter Bezugnahme der dort aufgeführten Bezugszeichen übertragenen Drehmoments M über die Zeit t während eines Lastwechsels mit Übergang vom Zugbetrieb in den Schubbetrieb. Im Verlauf des Lastwechsels wird der Klemmeingriff der Rampeneinrichtung 21 gelöst und bei Aufbau des negativen Drehmoments an den Rampen wieder aufgebaut. In idealer Weise erfolgt das Lösen des Klemmeingriffs, mit dem ein kurzfristiges Lösen der Reibungskupplung 3 mit einem geringen Momentenruck ΔM(0) verbunden ist, am Nullpunkt des übertragenen Drehmoments M. Durch das geringe oder nicht vorhandene Drehmoment M fällt dieser Momentenruck ΔM(0) gering aus. Infolge der Reibung der Rampeneinrichtung 21 während der Klemmung der ersten Gegendruckplatte 7 und der zweiten Anpressplatte 16 aufeinander erfolgt die Aufhebung der Klemmung erst bei bereits teilweise aufgebautem negativem Drehmoment M, so dass der reale Momentenruck ΔM(r) höher als der Momentenruck ΔM(0) am Nullpunkt des Drehmoments M ausfällt.

Es hat sich zur Verminderung des realen Momentenrucks ΔM(r) als vorteilhaft erwiesen, die beiden Kupplungsscheiben 12, 19 mit unterschiedlicher Torsionssteifigkeit zwischen den Reibbelägen 11, 18 auszustatten, so dass quasi die Reibbeläge 18 der zweiten Kupplungsscheibe 19 entgegen der Drehmomentrichtung vorgespannt sind, so dass bei einer Absenkung des Drehmoments der Reibschluss an der zweiten Reibungskupplung 3 unter Vorspannung früher, das heißt, die Reibung an der Rampeneinrichtung 21 kompensierend aufgehoben wird. Daraus erfolgt ein geringerer realer Momentenruck ΔM(r), der bei entsprechender Vorgabe der Vorspannung in Umfangsrichtung dem Momentenruck ΔM(0) am Nullpunkt des Drehmoments angenähert werden kann. In dem Ausführungsbeispiel des Kupplungsaggregats 1 der Figur 1 wird die Vorspannung mittels des Torsionsschwingungsdämpfers 20 erzielt. Die Verwendung reiner Federelemente beispielsweise in der Kupplungsscheibe 12 kann ebenso erfolgreich sein.

### Bezugszeichenliste

- 1: Kupplungsaggregat
- 1a: Kupplungsaggregat
- 1b: Kupplungsaggregat
- 2: Reibungskupplung
- 3: Reibungskupplung
- 4: Drehachse
- 5: Kurbelwelle
- 6: Getriebeeingangswelle
- 7: Gegendruckplatte
- 8: Blattfeder
- 9: Anpressplatte
- 10: Tellerfeder
- 11: Reibbelag
- 12: Kupplungsscheibe
- 13: Tellerfederspitze
- 14: Widerlager
- 15: Gegendruckplatte
- 16: Anpressplatte
- 17: Blattfedern
- 18: Reibbelag
- 19: Kupplungsscheibe
- 20: Torsionsschwingungsdämpfer
- 21: Rampeneinrichtung
- 22: Rampe
- 23: Rampe
- 24: Kugelrampe
- 25: Kugelrampe
- 26: Kugel
- 27: Radiallager
- 27a: Axiallager
- 28: Gehäuse
- 29: Außenring
- 29a: Lagerhalter
- 30: Sicherungsscheibe
- 31: Innenring
- 32: Schulter
- 33: Sicherungsscheibe
- 34: Führungsteil
- 35: Rampenteil
- 36: Reibfläche
- 37: Drahtring
- 38: Stufen bolzen
- 39: Schwungrad
- 40: Rampenträger
- 41: Reibflächenteil
- 42: Nulllage
- 43: Steigung
- 44: Steigung
- M: Drehmoment
- ΔM(0): Momentenruck am Nullpunkt
- ΔM(r): realer Momentenruck
- t: Zeit

## Patentansprüche

1. Kupplungsaggregat (1, 1a, 1b) in einem Antriebsstrang eines Kraftfahrzeugs mit einer Brennkraftmaschine mit einer Kurbelwelle (5) und einem Getriebe mit einer Getriebeeingangswelle (6) mit einer ersten Reibungskupplung (2) enthaltend eine erste Gegendruckplatte (7) und eine axial verlagerbar und drehfest an der ersten Gegendruckplatte (7) aufgenommene erste Anpressplatte (9), die von einer Tellerfeder (10) gegen die erste Gegendruckplatte (7) unter Zwischenlegung von Reibbelägen (11) einer ersten, mit der Getriebeeingangswelle (6) drehfest verbundenen Kupplungsscheibe (12) verspannt wird, und mit einer zweiten Reibungskupplung (3) enthaltend eine zweite Gegendruckplatte (15) und eine axial verlagerbar und drehfest an der zweiten Gegendruckplatte (15) aufgenommene Anpressplatte (16), die in Richtung der zweiten Gegendruckplatte (15) unter Zwischenlegung von Reibbelägen (18) einer zweiten, mit der Getriebeeingangswelle (6) verbundenen Kupplungsscheibe (19) verspannbar ist,wobei die zweite Gegendruckplatte (15) wirksam mit der Kurbelwelle (5) verbunden, die erste Gegendruckplatte (7) auf der zweiten Gegendruckplatte (15) verdrehbar gelagert und zwischen der ersten Gegendruckplatte (7) und der zweiten Anpressplatte (16) eine axial wirksame Rampeneinrichtung (21) angeordnet ist, **dadurch gekennzeichnet, dass** die erste Anpressplatte (9) radial innerhalb der zweiten Anpressplatte (16) angeordnet ist.

2. Kupplungsaggregat (1, 1 b) nach Anspruch 1, **dadurch gekennzeichnet, dass** die Gegendruckplatten (7, 15) aufeinander mittels eines Radiallagers (27) gelagert sind.

3. Kupplungsaggregat (1a) nach Anspruch 1, **dadurch gekennzeichnet, dass** die Gegendruckplatten (7, 15) aufeinander mittels eines Axiallagers (27a) gelagert sind.

4. Kupplungsaggregat (1, 1a, 1b) nach einem der Ansprüche 1 bis 3, **dadurch gekennzeichnet, dass** die Rampeneinrichtung (21) über den Umfang verteilte, ausgehend von einer Nulllage (42) in Umfangsrichtung beidseitig axial ansteigende Rampen (22, 23) aufweist.

5. Kupplungsaggregat (1, 1a, 1b) nach Anspruch 4, **dadurch gekennzeichnet, dass** die Rampen (22, 23) als Kugelrampen (24, 25) mit zwischen der ersten Gegendruckplatte und der zweiten Anpressplatte in den Kugelrampen (24, 25) aufgenommenen Kugeln (26) ausgebildet sind.

6. Kupplungsaggregat (1, 1a, 1b) nach einem der Ansprüche 1 bis 5, **dadurch gekennzeichnet, dass** die Reibbeläge (11, 18) der Kupplungsscheiben (12, 19) miteinander drehelastisch verbunden sind.

7. Kupplungsaggregat (1, 1a, 1b) nach Anspruch 6, **dadurch gekennzeichnet, dass** die Kupplungsscheiben (12, 19) mit einer unterschiedlichen Torsionssteifigkeit mit der Getriebeeingangswelle (6) verbunden sind.

8. Kupplungsaggregat (1, 1a, 1b) nach Anspruch 7, **dadurch gekennzeichnet, dass** zumindest eine der beiden Kupplungsscheiben (19) zwischen den Reibbelägen (18) und einer mit der Getriebeeingangswelle (6) drehfest verbundenen Nabe einen in Umfangsrichtung wirksamen Energiespeicher aufweist.

9. Kupplungsaggregat (1, 1a, 1b) nach Anspruch 7 oder 8, **dadurch gekennzeichnet, dass** zumindest eine der beiden Kupplungsscheiben (19) einen Torsionsschwingungsdämpfer (20) aufweist.

10. Kupplungsaggregat nach einem der Ansprüche 6 bis 9, **dadurch gekennzeichnet, dass** zwischen einer Nabe der ersten Kupplungsscheibe und einer Nabe der zweiten Kupplungsscheibe die Getriebeeingangswelle drehelastisch ausgebildet ist.

## Claims

1. Clutch assembly (1, 1a, 1b) in a drive train of a motor vehicle having an internal combustion engine with a crankshaft (5) and a transmission with a transmission input shaft (6) with a first friction clutch (2) comprising a first counterpressure plate (7) and a first pressure plate (9) which is received on the first counterpressure plate (7) such that it can be displaced axially and is fixed so as to rotate with the latter, which pressure plate (9) is braced by a cup spring (10) against the first counterpressure plate (7) with friction linings (11) of a first clutch plate (12) which is connected fixedly to the transmission input shaft (6) so as to rotate with it being positioned in between, and with a second friction clutch (3) comprising a second counterpressure plate (15) and a pressure plate (16) which is received on the second counterpressure plate (15) such that it can be displaced axially and is fixed so as to rotate with the latter, which pressure plate (16) can be braced in the direction of the second counterpressure plate (15) with friction linings (18) of a second clutch plate (19) which is connected to the transmission input shaft (6) being positioned in between, the second counterpressure plate (15) being operatively connected to the crankshaft (5), the first counterpressure plate (7) being mounted rotatably on the second counterpressure plate (15), and an axially acting ramp device (21) being arranged between the first counterpressure plate (7) and the second pressure plate (16), **characterized in that** the first pressure plate (9) is arranged radially within the second pressure plate (16).

2. Clutch assembly (1, 1b) according to Claim 1, **characterized in that** the counterpressure plates (7, 15) are mounted on one another by means of a radial bearing (27).

3. Clutch assembly (1a) according to Claim 1, **characterized in that** the counterpressure plates (7, 15) are mounted on one another by means of an axial bearing (27a).

4. Clutch assembly (1, 1a, 1b) according to one of Claims 1 to 3, **characterized in that** the ramp device (21) has ramps (22, 23) which are distributed over the circumference and rise axially on both sides in the circumferential direction starting from a zero position (42).

5. Clutch assembly (1, 1a, 1b) according to Claim 4, **characterized in that** the ramps (22, 23) are configured as ball ramps (24, 25) with balls (26) which are received in the ball ramps (24, 25) between the first counterpressure plate and the second counterpressure plate.

6. Clutch assembly (1, 1a, 1b) according to one of Claims 1 to 5, **characterized in that** the friction linings (11, 18) of the clutch plates (12, 19) are connected to one another in a rotationally elastic manner.

7. Clutch assembly (1, 1a, 1b) according to Claim 6, **characterized in that** the clutch plates (12, 19) are connected to the transmission input shaft (6) with a different torsional rigidity.

8. Clutch assembly (1, 1a, 1b) according to Claim 7, **characterized in that** at least one of the two clutch plates (19) has an energy store which acts in the circumferential direction between the friction linings (18) and a hub which is connected fixedly to the transmission input shaft (6) so as to rotate with it.

9. Clutch assembly (1, 1a, 1b) according to Claim 7 or 8, **characterized in that** at least one of the two clutch plates (19) has a torsional vibration damper (20).

10. Clutch assembly according to one of Claims 6 to 9, **characterized in that** the transmission input shaft is configured in a rotationally elastic manner between a hub of the first clutch plate and a hub of the second clutch plate.

## Revendications

1. Module d'embrayage (1, 1a, 1b) dans une chaîne cinématique d'un véhicule automobile comprenant un moteur à combustion interne avec un vilebrequin (5) et une boîte de vitesses avec un arbre d'entrée de boîte de vitesses (6) avec un premier embrayage à friction (2) contenant une première plaque de contre-pression (7) et une première plaque de pressage (9) déplaçable axialement et reçue de manière solidaire en rotation sur la première plaque de contre-pression (7), qui est serrée par un ressort Belleville (10) contre la première plaque de contre-pression (7) par interposition de garnitures de friction (11) d'un premier disque d'embrayage (12) connecté de manière solidaire en rotation à l'arbre d'entrée de boîte de vitesses (6), et avec un deuxième embrayage à friction (3) contenant une deuxième plaque de contre-pression (15) et une plaque de pressage (16) déplaçable axialement et reçue de manière solidaire en rotation sur la deuxième plaque de contre-pression (15), qui peut être serrée dans la direction de la deuxième plaque de contre-pression (15) par interposition de garnitures de friction (18) d'un deuxième disque d'embrayage (19) connecté à l'arbre d'entrée de boîte de vitesses (6), la deuxième plaque de contre-pression (15) étant connectée fonctionnellement au vilebrequin (5), la première plaque de contre-pression (7) étant supportée de manière rotative sur la deuxième plaque de contre-pression (15) et un dispositif de rampe actif axialement (21) étant disposé entre la première plaque de contre-pression (7) et la deuxième plaque de pressage (16), **caractérisé en ce que** la première plaque de pressage (9) est disposée radialement à l'intérieur de la deuxième plaque de pressage (16).

2. Module d'embrayage (1, 1b) selon la revendication 1, **caractérisé en ce que** les plaques de contre-pression (7, 15) sont supportées l'une sur l'autre au moyen d'un palier radial (27).

3. Module d'embrayage (1a) selon la revendication 1, **caractérisé en ce que** les plaques de contre-pression (7, 15) sont supportées l'une sur l'autre au moyen d'un palier axial (27a).

4. Module d'embrayage (1, 1a, 1b) selon l'une quelconque des revendications 1 à 3, **caractérisé en ce que** le dispositif de rampe (21) présente des rampes (22, 23) réparties sur la périphérie, montant axialement des deux côtés dans la direction périphérique à partir d'une position nulle (42).

5. Module d'embrayage (1, 1a, 1b) selon la revendication 4, **caractérisé en ce que** les rampes (22, 23) sont réalisées sous forme de rampes sphériques (24, 25) avec des billes (26) reçues entre la première plaque de contre-pression et la deuxième plaque de pressage dans les rampes sphériques (24, 25).

6. Module d'embrayage (1, 1a, 1b) selon l'une quelconque des revendications 1 à 5, **caractérisé en ce que** les garnitures de friction (11, 18) des disques d'embrayage (12, 19) sont connectées les unes aux autres de manière élastiquement rotative.

7. Module d'embrayage (1, 1a, 1b) selon la revendication 6, **caractérisé en ce que** les disques d'embrayage (12, 19) sont connectés à l'arbre d'entrée de boîte de vitesses (6) avec une rigidité en torsion différente.

8. Module d'embrayage (1, 1a, 1b) selon la revendication 7, **caractérisé en ce qu'**au moins l'un des deux disques d'embrayage (19) entre les garnitures de friction (18) et un moyeu connecté de manière solidaire en rotation à l'arbre d'entrée de boîte de vitesses (6) présente un accumulateur d'énergie agissant dans la direction périphérique.

9. Module d'embrayage (1, 1a, 1b) selon la revendication 7 ou 8, **caractérisé en ce qu'**au moins l'un des deux disques d'embrayage (19) présente un amortisseur d'oscillations de torsion (20).

10. Module d'embrayage selon l'une quelconque des revendications 6 à 9, **caractérisé en ce que** l'arbre d'entrée de boîte de vitesses est réalisé de manière élastiquement rotative entre un moyeu du premier disque d'embrayage et un moyeu du deuxième disque d'embrayage.
